Europäisches Patentamt

European Patent Office

Office européen des brevets

(19)

(11) Veröffentlichungsnummer: **0 076 944**
**B1**

# (12) EUROPÄISCHE PATENTSCHRIFT

(45) Veröffentlichungstag der Patentschrift:
19.06.85

(21) Anmeldenummer: 82108725.1

(22) Anmeldetag: 21.09.82

(51) Int. Cl.⁴: **B 62 D 35/00**

(54) Windabweiser für Lastkraftfahrzeuge.

(30) Priorität: 10.10.81 DE 8129698 U

(43) Veröffentlichungstag der Anmeldung:
20.04.83 Patentblatt 83/16

(45) Bekanntmachung des Hinweises auf die Patenterteilung:
19.06.85 Patentblatt 85/25

(84) Benannte Vertragsstaaten:
AT BE CH DE FR GB IT LI LU NL SE

(56) Entgegenhaltungen:
DE - A - 2 501 663
DE - U - 7 622 533
FR - A - 2 401 819
FR - A - 2 497 753
SU - A - 673 517
US - A - 4 084 846

(73) Patentinhaber: Kotflügelfabrik H. Köver GmbH & Co KG,
Estetalstrasse 45/47, D-2150 Buxtehude (DE)

(72) Erfinder: Henning, Jürges, Hauptstrasse 40,
D-2150 Buxtehude (DE)

(74) Vertreter: Siebert . Grättinger & Bockhorni,
Postfach 1649 Almeidaweg 35, D-8130 Starnberg
(München) (DE)

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

BUNDESDRUCKEREI BERLIN

## Beschreibung

Die Erfindung bezieht sich auf einen Windabweiser für Lastkraftfahrzeuge mit einem Windleitblech zum Ableiten des Fahrwinds über den Ladeflächenaufbau, welches auf dem Fahrzeugdach angeordnet, frontseitig schwenkbar gelagert und im hinteren Teil durch längenverstellbare Teleskopstützen abgestützt ist.

Windabweiser mit diesen Merkmalen sind bekannt (DE-A-2 501 663). Sie dienen der besseren Ableitung des Fahrwinds über einen über das Dach des Fahrgehäuses vorstehenden Ladeflächenaufbau. Um den Windabweiser an unterschiedliche Ladeflächenaufbauten anpassen zu können, ist das Windleitblech des Windabweisers frontseitig unmittelbar am Dach des Fahrzeugs schwenkbar angelenkt und sind längenverstellbare Teleskopstützen am Dach des Fahrergehäuses befestigt, die den hinteren Teil des Windleitblechs abstützen. Die Schwenklage des Windleitblechs läßt sich durch eine Längenverstellung der Teleskopstützen verändern.

Aufgabe der Erfindung ist es, einen Windabweiser zu schaffen, welcher in einfacher Weise an unterschiedliche Ladeflächenaufbauten anpaßbar ist. Dabei soll gewährleistet sein, daß im wesentlichen sämtliche Teile des Windabweisers hinter dem Windleitblech auch in den unterschiedlichen Schwenkstellungen des Windleitblechs versteckt sind, so daß Wirbelbildungen in der anströmenden Luft weitgehend ausgeschlossen sind. Zugleich soll der Aufbau außerordentlich robust und auch bei hohen Anströmgeschwindigkeiten vibrationsfrei sein, eine einfache Montage auf dem Dach sowie eine gute Anpassung an unterschiedliche Fahrergehäuse ermöglicht sein.

Nach Maßgabe der Erfindung wird diese Aufgabe durch die in Anspruch 1 angegebenen Merkmale gelöst, wobei zweckmäßige Ausgestaltungen in den Unteransprüchen angegeben sind.

Erfindungsgemäß wird eine Anpassung an unterschiedliche Ladeflächenaufbauten dadurch ermöglicht, daß das vordere Schwenklager im wesentlichen in horizontaler Richtung gegenüber dem Grundrahmen, über den der Windabweiser am Fahrzeugdach befestigt ist, nach vorne bzw. nach hinten verschoben und hierüber das Windableitblech aus möglichen Kollisionsstellungen mit dem Ladeflächenaufbau verlagert werden kann. Da das Windleitblech an den Enden zweier Teleskoparme schwenk- und feststellbar angelenkt ist, ergibt sich durch das Ineinandergreifen von Teleskoparmen und Grundrahmen ein außerordentlich kompakter Aufbau des Windabweisers bei gleichzeitig sehr großem Verstellbereich.

Schließlich ist aufgrund der sich im wesentlichen horizontal erstreckenden Teleskoparme gewährleistet, daß in den unterschiedlichen Einstellagen sämtliche Bauteile des Windabweisers hinter dem Windleitblech versteckt sind, weil das Windleitblech stets vor dem Grundrahmen und vor den Teleskoparmen verstellt wird.

Die gute Anpassung des Windabweisers an unterschiedliche Verhältnisse eines Lastkraftfahrzeugs wird noch dadurch verbessert, daß neben der Verstellbarkeit der vorderen Teleskoparme auch noch eine Teleskopverstellung für die hinteren Teleskoparme vorgesehen ist, welche die Befestigungsklemmen für das Fahrzeugdach aufnehmen. In die gleiche Richtung wirkt die Maßnahme, daß die Befestigung des Windabweisers am Fahrzeugdach über Montageplatten erfolgt, die am Grundrahmen bzw. am Grundrahmen vorstehende Streben schwenk- und feststellbar befestigt.

Eine weitere Anpassungsmöglichkeit ist dadurch gegeben, daß das Windleitblech gleichfalls schwenk- und feststellbar an den Enden der vorderen Teleskoparme befestigt ist. Die Fixierung der unterschiedlichen Einstellagen erfolgt im Falle der Teleskoparme zweckmäßigerweise über Feststellschrauben und im Falle der feststellbaren Gelenke mittels Gabelstücke und darin aufgenommenen Schraubgelenkbolzen.

Ein sehr verwindungsstarker Aufbau wird dadurch erreicht, daß der Grundrahmen und die Teleskoparme aus Vierkantprofilen aufgebaut sind.

Zusammengefaßt erlaubt der Windabweiser jede beliebige Neigung des Windleitblechs ohne Veränderung der Grundrahmenposition auf dem Fahrzeugdach.

Es werden Beispiele der Erfindung anhand der Zeichnung beschrieben. Darin zeigt

Fig. 1 eine schematische Seitenansicht des Windabweisers sowie

Fig. 2 eine schematische Draufsicht auf den Grundrahmen ohne das Windleitblech und ohne die Teleskopstützen.

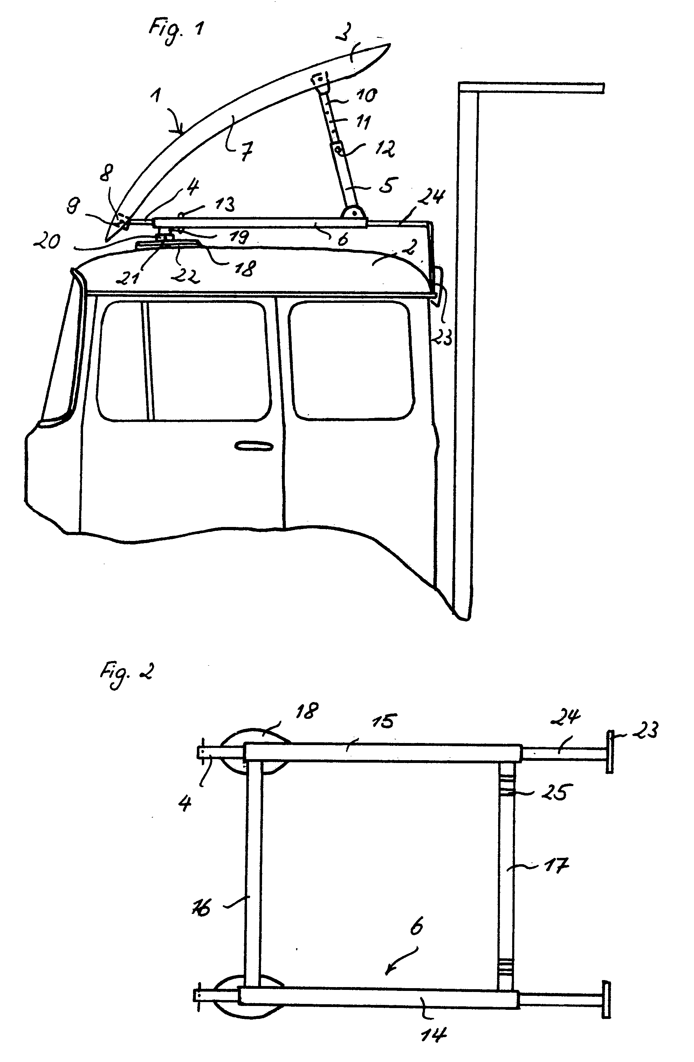

Der in Fig. 1 allgemein mit dem Bezugszeichen 1 gekennzeichnete Windabweiser dient zum Ableiten des Fahrwinds über den über das Dach des Fahrergehäuses eines Lastkraftfahrzeuges hinausstehenden Ladeflächenaufbau. Der auf dem Dach 2 des Fahrergehäuses befestigte Windabweiser 1 umfaßt im wesentlichen ein gewölbtes Windleitblech 3, vordere Teleskoparme 4, längenverstellbare Teleskopstützen 5 und einen Grundrahmen 6, auf welchen die Teleskopstützen 5 und die vorderen Teleskoparme 4 befestigt sind.

Das Windleitblech 3 weist zweckmäßigerweise an den Seitenrändern nach unten weisende Leitflansche 7 auf und ist bevorzugt aus Aluminiumblech oder Stahlblech hergestellt.

Frontseitig ist das Windleitblech 3 an den freien Enden der Teleskoparme 4 schwenkbar gelagert, wozu am Windleitblech Gabelstücke 8 befestigt sind, in welche die vorderen Teleskoparme 4 eingreifen und über einen Schraubgelenkbolzen 9 schwenk- und feststellbar befestigt sind. Dadurch kann das Windleitblech nach dem Lösen des Schraubgelenkbolzens 9 in verschiedene Schwenkstellungen gebracht und dann in diesen Schwenkstellungen durch Anziehen des Schraubgelenkbolzens 9 festgelegt werden.

Mit seinem hinteren Ende ist das Windleitblech 3 an Teleskopstützen 5 angelenkt, wobei zweckmäßigerweise wiederum am Windleitblech 3 Gabelstücke angeordnet sind, in welche die oberen Arme der Teleskopstützen 5 eingreifen. Wie aus Fig. 1 hervorgeht, ist der obere Teleskoparm 10 mit in Abständen übereinander angeordneten Öffnungen 11 versehen, die je nach Längenverstellung der Stützen 5 mit einem Feststellstift 12 zusammenwirken. Die Teleskopstützen 5 sind mit ihrem unteren Ende am Grundrahmen 6 angelenkt.

Die vorderen Teleskoparme 4 sind im Grundrahmen 6 verschiebbar eingesteckt, wobei die Festlegung der Verschiebstellung durch im Grundrahmen 6 aufgenommene Feststellschrauben 13 erfolgt.

Wie aus Fig. 2 hervorgeht, ist der Grundrahmen 6 im wesentlichen durch zwei seitliche Träger 14 und 15 aufgebaut, die durch Querstreben 16 und 17 zu einem im wesentlichen rechteckförmigen Rahmen verbunden sind.

Die Befestigung des Grundrahmens 6 erfolgt über Montageplatten 18, die mit vom Grundrahmen 6 nach unten vorstehenden Streben 19 schwenk- und feststellbar verbunden sind. Wie aus Fig. 1 hervorgeht, sind die Montageplatten 18 mit Gabelstücken 20 versehen, welche mittels eines Schraubgelenkbolzens 21 mit den Streben 19 verbunden sind. Zwischen Dach und Montageplatten 18 ist jeweils eine schwingungsdämpfende Schicht 22 als Zwischenlager vorgesehen.

Die hintere Befestigung des Grundrahmens 6 am Fahrergehäuse erfolgt durch übliche Befestigungsklemmen 23, welche an hinteren Teleskoparmen 24 befestigt sind. Die hinteren Teleskoparme 24 sind gleichfalls wie die vorderen Teleskoparme 4 im Grundrahmen 6 verschiebbar und feststellbar aufgenommen. Wie insbesondere aus Fig. 2 hervorgeht, sind jeweils zwei vordere und zwei hintere Teleskoparme 4 bzw. 24 vorgesehen, welche in entsprechende Öffnungen der seitlichen Träger 14 und 15 eingeschoben sind. Die Teleskopstützen 5 sind grundrahmenseitig in Gabelstücken 25 schwenkbar befestigt, welche auf der hinteren Querstrebe 17 angeordnet sind (vgl. Fig. 2).

Zweckmäßigerweise sind die Teleskoparme 4, 24 und der Grundrahmen 6, als auch die Träger 15 und die Querstreben 16 durch Vierkantrohre gebildet, wodurch ein verwindungssteifer Grundrahmen entsteht.

Beim oben beschriebenen Windabweiser 1 läßt sich das Windleitblech 1 einerseits über die längenverstellbaren Teleskopstützen 5 in unterschiedliche Schwenkstellungen überführen. Andererseits läßt sich eine unterschiedliche Schwenkstellung des Windleitblechs 3 auch durch das Ein- bzw. Ausschieben der Teleskoparme 4 bewerkstelligen, wodurch die Schwenkachse der Schwenklagerung des Windleitblechs nach vorne bzw. nach hinten verlagert wird. Dadurch läßt sich das Windleitblech 3 zugleich mit der Veränderung der Schwenklage in einen unterschiedlichen Abstand zum Ladeflächenaufbau verschieben. Weitere Verstellmöglichkeiten des Windabweisers 1 ergeben sich über die schwenkbare Lagerung der Montageplatten 18 relativ zum Grundrahmen 6 sowie durch die ausziehbaren hinteren Teleskoparme 24. Letzteres erlaubt eine gute Anpassung des Windabweisers 1 für unterschiedliche Fahrzeuggehäuse.

Im Bereich seiner vorderen Kante ist das Windleitblech 3 über die Befestigungsstelle der Teleskoparme 4 also über die Gabelstücke 8 hinaus verknüpft, so daß es auch den Unterbau des Grundrahmens 6 abdeckt.

## Patentansprüche

1. Windabweiser für Lastkraftfahrzeuge mit einem Windleitblech zum Ableiten des Fahrtwinds über den Ladeflächenaufbau, welches auf dem Fahrzeugdach angeordnet, frontseitig schwenkbar gelagert und im hinteren Teil durch längenverstellbare Teleskopstützen abgestützt ist, dadurch gekennzeichnet, daß das Windleitblech (3) frontseitig an den Enden zweier Teleskoparme (4) schwenkbar gelagert ist, welche in Fahrzeuglängsrichtung verschiebbar in einem am Fahrzeugdach (2) befestigten Grundrahmen (6) aufgenommen sind.

2. Windabweiser nach Anspruch 1, dadurch gekennzeichnet, daß das Windleitblech (3) über Gabelstücke (8) mit den Teleskoparmen (4) schwenkbar verbunden ist.

3. Windabweiser nach Anspruch 1 oder 2, dadurch gekennzeichnet, daß der Grundrahmen (6) durch zwei seitliche Träger (14, 15) gebildet ist, welche durch Querstreben (16, 17) zu einem im wesentlichen rechteckförmigen Rahmen verbunden sind.

4. Windabweiser nach Anspruch 3, dadurch gekennzeichnet, daß am vorderen Ende der seitlichen Träger (14, 15) des Grundrahmens die das Windleitblech (3) abstützende Teleskoparme (4) und am hinteren Ende der Träger zwei weitere mit Befestigungsklemmen (23) für das Fahrzeugdach versehene Teleskoparme (24) verschiebbar aufgenommen sind, wobei die Teleskoparme (4, 24) durch Feststellschrauben (13) in ihren Verschiebstellungen festgelegt sind.

5. Windabweiser nach einem der vorhergehenden Ansprüche, dadurch gekennzeichnet, daß die längenverstellbare Teleskopstützen (5) auf der hinteren Querstrebe (17) angelenkt und über Gabelstücke mit dem Windleitblech (3) schwenkbar verbunden sind.

6. Windabweiser nach einem der vorhergehenden Ansprüche, dadurch gekennzeichnet, daß am vorderen Ende der Träger (14, 15) des Grundrahmens (6), in welchem die Teleskoparme (4) für das Windleitblech (3) aufgenommen sind, Montageplatten (18) je durch einen Schraubgelenkbolzen (21) und ein Gabelstück (20) schwenk- und feststellbar angeordnet sind, welche unter Zwischenlage einer schwingungsdämpfenden Schicht (22) auf dem Dach (2) des Fahrzeugs befestigt sind.

7. Windabweiser nach einem der vorhergehenden Ansprüche, dadurch gekennzeichnet, daß die Teleskoparme (4, 24) und der Grundrahmen (6) aus Vierkantprofilen bestehen.

8. Windabweiser nach einem der vorhergehenden Ansprüche, dadurch gekennzeichnet, daß das Windleitblech (3) aus Aluminium- oder Stahlblech hergestellt ist.

9. Windabweiser nach Anspruch 8, dadurch gekennzeichnet, daß das Windleitblech mit seitlichen Leitflanschen (7) versehen ist.

10. Windabweiser nach einem der vorhergehenden Ansprüche, dadurch gekennzeichnet, daß das Windleitblech (3) am vorderen Ende nach unten hin über die Befestigungsstelle der Teleskoparme (4) hinaus verlängert ist.

## Claims

1. Wind deflector for heavy goods vehicles having an airflow guide plate for deflecting the relative airflow over the loading surface structure, which plate is arranged on the vehicle roof, is pivotally mounted at the front and is supported at the rear by telescopic struts of adjustable length, characterised in that at the front the wind guide plate (3) is pivotally mounted at the ends of two telescopic arms (4) which are accommodated in a base frame (6), which is attached to the vehicle roof (2), in such a manner that they can be displaced in the longitudinal direction of the vehicle.

2. Wind deflector according to claim 1, characterised in that the airflow guide plate (3) is pivotally connected to the telescopic arms (4) by means of fork-shaped elements (8).

3. Wind deflector according to claim 1 or 2, characterised in that the base frame (6) is formed by two side supports (14, 15) which are connected to form a substantially rectangular frame by means of cross-struts (16, 17).

4. Wind deflector according to claim 3, characterised in that the telescopic arms (4) supporting the airflow guide plate (3) are accommodated in a displaceable manner at the forward end of the side supports (14, 15) of the base frame, and two further telescopic arms (24), provided with attachment clips (23) for the vehicle roof, are accommodated in a displaceable manner at the rear end of the supports, the telescopic arms (4, 24) being fixed in their displaced positions by fixing screws (13).

5. Wind deflector according to any one of the preceding claims, characterised in that the telescopic struts (5) of adjustable length are articulated on the rear cross-strut (17) and are pivotally connected to the airflow guide plate (3) by means of fork-shaped elements.

6. Wind deflector according to any one of the preceding claims, characterised in that at the forward end of the supports (14, 15) of the base frame (6), in which the telescopic arms (4) for the airflow guide plate (3) are accommodated, there are arranged mounting plates (18) each of which can be pivoted and fixed by a screw hinge pin (21) and a fork-shaped element (20) and which are attached to the roof (2) of the vehicle with the intermediate arrangement of a vibration-damping layer (22).

7. Wind deflector according to any one of the preceding claims, characterised in that the telescopic arms (4, 24) and the base frame (6) are of rectangular section.

8. Wind deflector according to any one of the preceding claims, characterised in that the airflow guide plate (3) is manufactured from aluminium or steel sheet.

9. Wind deflector according to claim 8, characterised in that the airflow guide plate is provided with lateral guide flanges (7).

10. Wind deflector according to any one of the preceding claims, characterised in that the airflow guide plate (3) extends downwards at the forward end beyond the point of attachment of the telescopic arms (4).

## Revendications

1. Déflecteur de vent pour camions comportant une plaque directrice de vent servant à dévier le déplacement d'air par dessus la superstructure de surface de charge, qui est disposé sur le toit du véhicule, monté de manière à pouvoir pivoter du côté avant et soutenu dans la partie arrière par des appuis télescopiques réglables en longueur, caractérisé en ce que la plaque directrice de vent (3) est montée de manière à pouvoir pivoter du côté avant sur les extrémités de deux bras télescopiques (4) qui sont logés, de manière à pouvoir coulisser dans la direction longitudinale du véhicule, dans un cadre de base (6) fixé au toit (2) du véhicule.

2. Déflecteur de vent selon la revendication 1, caractérisé en ce que la plaque directrice de vent (3) est reliée de manière à pouvoir pivoter aux bras télescopiques (4) par l'intermédiaire de pièces de fourche (8).

3. Déflecteur de vent selon l'une des revendications 1 et 2, caractérisé en ce que le cadre de base (6) est formé par deux poutrelles latérales (14, 15) qui sont reliées, par des traverses (16, 17), en un cadre pratiquement rectangulaire.

4. Déflecteur de vent selon la revendication 3, caractérisé en ce qu'à l'extrémité avant des poutrelles latérales (14, 15) du cadre de base sont logés de manière à pouvoir coulisser les bras télescopiques (4) soutenant la plaque directrice de vent (3) et à l'extrémité arrière des poutrelles, deux autres bras télescopiques (24) munis de pinces de fixation (23) pour le toit du véhicule, les bras télescopiques (4, 14) étant fixés dans leurs positions de coulissement par des vis de blocage (13).

5. Déflecteur de vent selon l'une des revendications précédentes, caractérisé en ce que les appuis télescopiques réglables en longueur (5) sont articulés à la traverse arrière (17) et sont reliées de manière à pouvoir pivoter à la plaque directrice de vent (3) par l'intermédiaire de pièces de fourche (3).

6. Déflecteur de vent selon l'une des revendications précédentes, caractérisé en ce qu'à l'extrémité avant des poutrelles (14, 15) du cadre de base (6) dans lequel sont logés les bras télescopiques (4) adjoints à la plaque directrice de vent (3), des plaques de montage (18) sont disposées chacune de manière à pouvoir pivoter et être bloquées, par un goujon fileté d'articulation (21) et une pièce de fourche (20) qui sont fixés sur le toit (2) du véhicule avec interposition d'une couche (22) amortissant les vibrations.

7. Déflecteur de vent selon l'une des revendications précédentes, caractérisé en ce que les bras télescopiques (4, 24) et le cadre de base (6) sont formés de profilés carrés.

8. Déflecteur de vent selon l'une des revendications précédentes, caractérisé en ce que la plaque directrice de vent (3) est fabriquée en tôle d'aluminium ou d'acier.

9. Déflecteur de vent selon la revendication 8, caractérisé en ce que la plaque directrice de vent est munie d'ailes directrices latérales (7).

10. Déflecteur de vent selon l'une des revendications précédentes, caractérisé en ce que la plaque directrice de vent (3) est prolongée à l'extrémité avant vers le bas, au delà du point de fixation des bras télescopiques (4).

Fig. 1

Fig. 2

7